# EUROPÄISCHE PATENTSCHRIFT

(11) **EP 1 853 781 B1**
(45) Veröffentlichungstag und Bekanntmachung des Hinweises auf die Patenterteilung: **27.07.2016**
(21) Anmeldenummer: 06723158.9
(22) Anmeldetag: 01.03.2006
(51) Int. Cl.: E05B 37/12, E05B 37/14, E05B 67/36, F16B 41/00, F16K 35/08

(54) **MIT EINER ZU SICHERNDEN VORRICHTUNG ZUSAMMENWIRKENDE SICHERUNGSEINRICHTUNG**
SECURING MECHANISM WHICH COOPERATES WITH A DEVICE THAT IS TO BE SECURED
DISPOSITIF DE SECURITE COOPERANT AVEC UN DISPOSITIF A VERROUILLER

(30) Priorität: 04.03.2005 DE 102005010483
(43) Veröffentlichungstag der Anmeldung: 14.11.2007
(73) Patentinhaber: BSS Baumann Sicherheitssysteme GmbH, 78315 Radolfzell (DE)
(72) Erfinder: Schmidt, Reinhold, 79235 Vogtsburg i. K. (DE)
(74) Vertreter: Westphal, Mussgnug & Partner Patentanwälte mbB
(86) Internationale Anmeldenummer: PCT/EP2006/001860
(87) Internationale Veröffentlichungsnummer: WO 2006/092284

(56) Entgegenhaltungen:
- EP-A- 0 360 125
- EP-A- 0 867 583
- DE-A1- 3 311 087
- DE-A1- 10 162 108
- DE-C- 496 692
- DE-C- 508 457
- DE-U1-202004 017 548
- FR-A- 542 068
- FR-A1- 2 392 204
- FR-A1- 2 689 170
- GB-A- 1 500 130
- US-A- 4 014 193
- US-A- 5 211 040

## Beschreibung

Die Erfindung betrifft eine mit einer zu sichernden Vorrichtung zusammenwirkende Sicherungseinrichtung, die ein in eine Bohrung der zu sichernden Vorrichtung einsteckbares oder auf einen freien Endbereich der zu sichernden Vorrichtung aufsteckbares Verschlussteil besitzt, in dem wenigstens zwei Verriegelungselemente drehbar gelagert sind und mit Ausnahme jeweils einer festgelegten Drehposition mittels eines Eingreifelements in einer Ringnut der zu sichernden Vorrichtung zur Verriegelung derselben eingreifen, wobei jeweils ein von außen zugänglicher Endbereich der Verriegelungselemente zum Eingriff eines Justierglieds ausgebildet ist, wobei jedem Verriegelungselement eine dieses in Richtung seiner Drehachse gegen eine Anlagefläche des Verschlussteils drückende Feder zugeordnet ist, und wobei eine mehrere Raststellen aufweisen-de Raststruktur an einer Ringfläche der verriegelungselemente oder des Verschlussteils angeordnet ist, wobei in axialer Richtung ein Rastelement gegenübersteht, das bei einer Drehung des jeweiligen Verriegelungselements wenigstens beim Verkanten oder axialen Verschieben des Verschlussteils in Raststellen der Raststruktur eingreift.

Aus der DE 20 2004 017 548 U1 ist eine solche Sicherungseinrichtung mit einem Befestigungselement wie eine Schraube bekannt, das einen kappenförmig ausgebildeten Sicherungskopf gegen unerwünschtes Lösen umfasst, welcher einen Aufnahmeraum für ein von dem Befestigungselement axial abragendes Ansatzteil aufweist, wobei im montierten Zustand in dem Aufnahmeraum wenigstens zwei drehbar gelagerte Arretierteile angeordnet sind, die jeweils ein durch Drehung des zugeordneten Arretierteils verschwenkbares Sperrglied aufweisen, wobei das Sperrglied in Sicherungsstellung eine Außenkontur des Querschnitts eines Haltestücks des Ansatzteils an einer Anlagefläche des Haltestücks anliegend hintergreift und dadurch den Sicherungskopf gegen ein Abziehen in axialer Richtung fixiert und wobei das Sperrglied in Freigabestellung ein axial gerichtetes Abziehen des Sicherungskopfes von dem Befestigungselement zulässt.

Die EP 0 360 125 A1 offenbart eine Schraube mit einem Diebstahlsicherungskopf vorgeschlagen, der mit einer ein im wesentlichen zylindrisch ausgebildetes, von der Schraube ausgehendes Werkzeug-Ansatzteil aufnehmenden Bohrung versehen ist. In diesem Diebstahlsicherungskopf sind im wesentlichen parallel neben der Bohrung wenigstens zwei drehbar gelagerte Stifte angeordnet, die jeweils mit einem in eine Ringnut am Werkzeug-Ansatzteil durch Drehung des zugeordneten Stifts einschwenkbaren Sperrglied drehfest verbunden sind, wobei der obere, von aussen zugängliche Endbereich der Stifte als Justierwerkzeug-Ansatzteil ausgebildet ist. Nur wenn alle Stifte bzw. Sperrglieder eine ganz exakt definierte Position einnehmen, kann der Diebstahlsicherungskopf abgezogen werden.

Bei einer aus der EP 0360125 B1 bekannten Sicherungseinrichtung dieser Gattung ist die zu sichernde Vorrichtung als Schraube, insbesondere als Sicherungsschraube für Kraftfahrzeugräder, ausgebildet. Im gesicherten Zustand ist das Verschlussteil drehbar auf dem freien Endbereich der Schraube angeordnet und verhindert den Zugang zu derselben, um ein unbefugtes Lösen zu verhindern. Erst wenn alle Verriegelungselemente in ihre jeweils festgelegte Drehposition gebracht werden, in der sie außer Eingriff mit der Ringnut des Schraubenendbereichs gelangen, kann das Verschlussteil abgezogen werden, und das nun freie Kopfteil der Schraube kann mittels eines geeigneten Werkzeugs zum Lösen der Schraube gedreht werden.

Der Nachteil der vorstehend benannten Sicherungseinrichtung besteht darin, dass es je nach Fertigungsgenauigkeit der Sicherungseinrichtung möglich ist, durch Verkanten des Verschlussteils und gleichzeitiges Drehen eines Verriegelungselements dessen festgelegte Drehposition abzutasten, in der es außer Eingriff mit der Ringnut gelangt. Dies kann durch einen kleinen Ruck, insbesondere bei ungenauer Fertigung, abgefühlt werden. Auf diese Weise können nacheinander alle Verriegelungselemente in ihre jeweils festgelegte codierte Drehposition gebracht werden, um das Verschlussteil abzuziehen.

Die Aufgabe der vorliegenden Erfindung besteht darin, eine alternative Rasteinrictung zu finden, wobei ein Abfühlen der Verriegelungspositionen der Verriegelungselemente auch bei kräftigem Verkanten und schlechten Fertigungstoleranzen nicht mehr möglich ist.

Diese Aufgabe wird erfindungsgemäß dadurch gelöst, dass durch die jeweils auf ein Verriegelungselement einwirkende Feder das Eingreifelement federbelastet gegen die als Ringfläche ausgebildete Anlagefläche des Verschlussteils gedrückt wird, wobei die dieser Anlagefläche zugewandte Ringfläche des Eingreifelemente mit der Raststruktur versehen ist und eine dieser Ringfläche gegenüberliegende Kante der Ringnut der zu sichernden Vorrichtung als Rastelement dient, das wenigstens beim Verkanten oder axialen Verschieben des Verschlussteils in eine der als geringfügig vertiefte Ausnehmungen ausgebildeten Raststellen der Raststruktur eingreift, wobei eine Fläche der Raststellen einer Fläche einer Ausnehmung des Eingreifelements entspricht, wobei diese Ausnehmung eine Entriegelungsstellung des Eingreifelements bestimmt.

Der Vorteil der erfindungsgemäßen Sicherungseinrichtung besteht insbesondere darin, dass es infolge der Raststruktur nicht mehr möglich ist, die Entriegelungspositionen der Verriegelungselemente abzutasten, weder durch verkanten des Verschlussteils noch auf eine sonstige Weise, sodass das Rastelement entweder durch Verkanten oder durch Federkraft in die einzelnen Raststellungen eingreift und man somit nicht unterscheiden kann, welche Raststelle mit der Entriegelungsposition übereinstimmt, da bei jeder Drehung eines Verriegelungselements das Rastelement von Raststelle zu Raststelle springt. Hierdurch wird eine sehr hohe Sicherheit gegen unautorisiertes Entfernen des Verschlussteils erreicht, sodass die mit dem Verschlussteil versehene zu sichernde Vorrichtung jeden unautorisierten Zugriff unterbindet. Darüber hinaus liegen die Vorteile der Lösung gemäß dem Stand der Technik weiterhin beziehungsweise zusätzlich vor, das heißt, es wird ein weitgehender Schutz gegen mechanische Beschädigungen erreicht, und da zur Verriegelung alle Verriegelungselemente in bestimmte Stellungen gebracht werden müssen, ist insbesondere bei einer größeren Zahl von Verriegelungselementen ein Auffinden der Entriegelungsposition nahezu unmöglich.

Durch die in den Unteransprüchen aufgeführten Maßnahmen sind vorteilhafte Weiterbildungen und Verbesserungen der im Anspruch 1 angegebenen Sicherungseinrichtung möglich.

Bei einer bevorzugten Ausführung sind die Verriegelungselemente als drehbar gelagerte Stifte ausgebildet, die jeweils mit dem scheibenförmigen konzentrischen Eingreifelement zum Eingriff in die Ringnut der zu sichernden Vorrichtung versehen sind, wobei das Eingreifelement in der festgelegten Drehposition eine randseitige Ausnehmung besitzt, durch die ein Eingriff in die Ringnut in dieser Drehposition verhindert wird. Je nach Ausführung der zu sichernden Vorrichtung kann dabei der Eingriff in diese Ringnut radial nach außen oder radial nach innen erfolgen.

Wahlweise ist möglich, den Rasteingriff nur beim Verkanten oder Ziehen zu bewirken, sodass im unverkanteten oder kraftfreien Zustand keine Verrastung erfolgt, oder aber die Raststruktur ist zur Verbindung mit der gegenüberliegenden Kante der Ringnut so anzubringen, dass beim Drehen der Verriegelungselemente jeweils von Raststelle zu Raststelle weitergesprungen wird.

Das beispielsweise als Dreheinstellglied ausgebildete Justierglied ist zweckmäßigerweise mit einer Einstellskala Versehen, sodass beispielsweise bei vier Verriegelungselementen eine vierstellige Zahl als Codierzahl zur Entriegelung festgelegt wird und gemerkt werden muss, wobei diese Zahl dann durch das Justierglied eingestellt werden kann.

Das Justierglied oder ein anderes Hilfsinstrument ist zweckmäßigerweise mit dem Verschlussteil zugfest verbindbar, insbesondere mittels einer Gewinde- oder Bajonettverbindung, um nach der Entriegelung das Verschlussteil leichter abziehen zu können. Dies ist insbesondere bei einem in eine Öffnung eingesetzten Verschlussteil von Bedeutung.

Das Verschlussteil besteht zweckmäßigerweise wenigstens aus zwei axial zusammensetzbaren, insbesondere zusammenschraubbaren Einzelelementen, die jeweils Lagerstellen für die Verriegelungselemente aufweisen. Auf diese Weise wird eine besonders einfache und schnelle Montage des Verschlussteils ermöglicht. Zum Schutz gegen Verschmutzung, zum Beispiel bei der Anwendung bei Radschrauben eines Kraftfahrzeugrads, ist die mit den Zugriffen zu den Endbereichen der Verriegelungselemente versehene Stirnseite des Verschlussteils zweckmäßigerweise mit einer lösbaren Abdeckkappe versehen. Ausführungsbeispiele der Erfindung sind in der Zeichnung dargestellt und in der nachfolgenden Beschreibung näher erläutert. Es zeigen:
Figur 1 eine Schnittdarstellung eines Ausführungsbeispiels der Erfindung entlang der Schnittlinie A-A in Figur 3,
Figur 2 eine perspektivische Schrägansicht des ersten Ausführungsbeispiels bei abgenommenem oberen Bereich des Verschlussteils,
Figur 3 eine Draufsicht auf die obere Stirnseite des ersten Ausführungsbeispiels,
Figur 4 ein mit einer Einstellskala versehenes Justierglied zur Codiereinstellung,
Figur 5 eine Schnittdarstellung eines nicht zur Erfindung gehörenden Beispiels der Erfindung entlang der Schnittlinie B-B in Figur 7,
Figur 6 eine Draufsicht auf das in Figur 5 dargestellte Beispiel bei abgenommenem oberen Bereich des Verschlussteils,
Figur 7 eine Draufsicht auf die obere Stirnseite des in den Figuren 5 und 6 dargestellten Beispiels und
Figur 8 eine Schnittdarstellung einer weiteren nicht zur Erfindung gehörenden Ausführung.

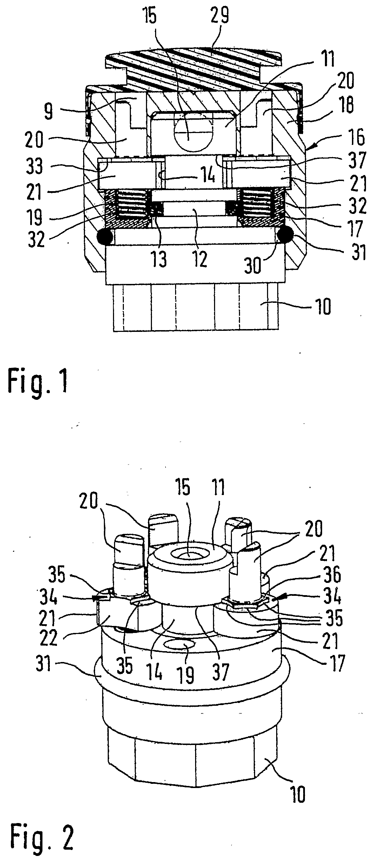

Bei dem in den Figuren 1 bis 3 dargestellten ersten Ausführungsbeispiel ist eine zu sichernde Vorrichtung 10 ein stangen- oder zylinderartiges Teil, von dem lediglich ein Endbereich dargestellt ist. Dabei kann es sich beispielsweise um eine Schraube, eine Mutter, eine Fahrradachse, ein Teil eines Bügelschlosses oder dergleichen handeln. Am zu sichernden Ende dieser Vorrichtung ist an der entsprechenden Stirnseite konzentrisch ein zylindrischer Fortsatz 11 angeformt, beispielsweise einstückig angeformt, der im Durchmesser kleiner ist und eine kleinere Ringnut 12 zur Aufnahme einer auch als Bremse beim Drehen und bei einer Zugbewegung dienenden Ring-dichtung 13 und eine größere Ringnut 14 besitzt, die als Verriegelungsringnut dient und deren Funktion noch näher be-schrieben wird. Konzentrisch ist in diesen zylindrischen Fortsatz 11 endseitig eine gehärtete Stahlkugel 15 eingepresst, die zur Verhinderung eines Aufbohrens der Anordnung dient.

Im Falle der Ausbildung als Schraube ist der zylindrische Fortsatz 11 als Werkzeugangriffsteil ausgebildet und besitzt beispielsweise einen Innensechskant oder einen Außensechskant oder eine sonstige Werkzeugaufnahme. Der Zugriff auf den als Werkzeugangriffsteil ausgebildeten Fortsatz 11 soll verhindert werden, um beispielsweise einen Diebstahl, ein Öffnen oder eine Bewegung des mit dieser Schraube gesicherten Teils zu verhindern. Dasselbe gilt für die Ausbildung als Mutter. Bei der Ausbildung beispielsweise als Fahrradachse, Bügelschloss oder dergleichen soll ein Herausnehmen des entsprechenden Teils aus seiner Halterung oder Lagerung verhindert werden.

Ein auf den zylindrischen Fortsatz 11 beziehungsweise die zu sichernde Vorrichtung 10 aufsteckbares Verschlussteil 16 besteht aus einem ringförmigen Unterteil 17 und einem topfartigen Oberteil 18, die miteinander in nicht dargestellter Weise verschraubt, verrastet (zum Beispiel durch Federsprengringe), verlötet, verschweißt oder verklebt sind. Das topfartige Oberteil 18 übergreift dabei das ringförmige Unterteil 17 und übergreift noch weiterhin einen Endbereich der zu sichernden Vorrichtung 10, um einen Zugriff sicher zu verhindern.

Das ringförmige Unterteil 17 besitzt fünf über den Umfang verteilte Sackbohrungen 19, die als Lagerstellen jeweils eines Endbereichs von fünf Verriegelungselementen 20 dienen, wobei die entgegengesetzten Endbereiche dieser Verriegelungselemente 20 in den Durchgangsbohrungen 9 des topfartigen Oberteils 18 drehbar gelagert sind.

Die im Übrigen rundstabförmigen Verriegelungselemente 20 besitzen ungefähr mittig jeweils scheibenartige Eingreifelemente 21, die einstückig an den Verriegelungselementen 20 angeformt oder mit diesen fest verbunden sind. Sie dienen zum Sicherungseingriff in die größere Ringnut 14 der Vorrichtung 10. Jeweils an einer Stelle des Außenumfangs besitzen diese Eingreifelemente 21 eine Ausnehmung 22, die so an den Radius des zylindrischen Fortsatzes 11 angepasst ist, dass die Eingreifelemente 21 in einer Stellung, bei der diese Ausnehmung 22 radial nach innen weist, außer Eingriff mit der Ringnut 14 gelangen, also in eine Entriegelungsstellung. Werden alle fünf Verriegelungselemente 20 in die Entriegelungsstelle gedreht, so kann das Verschlussteil 16 von der Vorrichtung 10 abgezogen werden.

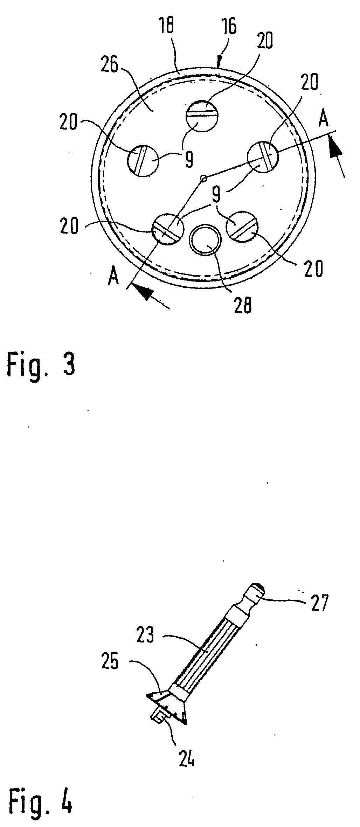

zur Einstellung der Verriegelungselemente 20 dient das in Figur 4 dargestellte als Dreheinstellglied ausgebildete Justierglied 23. Es besitzt ein Einsteckende 24 mit halbkreisförmigem Querschnitt, das jeweils beim Einstecken in eine der Durchgangsbohrungen 9 in Eingriff mit dem oberen Endbereich des jeweiligen Verriegelungselements 20 gelangt, das ebenfalls einen halbkreisförmigen Querschnitt besitzt. An Stelle des halbkreisförmigen Querschnitts können selbstverständlich auch andere ineinander greifende Querschnitte dienen, die ein Verdrehen der Verriegelungselemente ermöglichen. Das Justierglied 23 besitzt eine Einstellskala 25, mittels derer die jeweilige Entriegelungsposition eingestellt werden kann. Hierzu besitzt die obere Stirnfläche 26 des topfartigen Oberteils 18 um die Mündungen der Durchgangsbohrungen 19 herum entweder Skalen oder zumindest eine Null-Markierung, die im Ausführungsbeispiel gemäß Figur 3 als Zentrierbohrung ausgebildet ist. Das entgegengesetzte Ende des Justierglieds 23 ist mit einem Gewinde 27 versehen, das in ein Gewindesackloch 28 des topfartigen Oberteils 18 eingeschraubt werden kann. Dies dient als Abziehhilfe für das Oberteil 18. Anstelle eines Gewindes kann auch eine andere bekannte Verriegelung treten, beispielsweise eine Bajonett- oder Rastverriegelung.

Zum Schutz gegen Verschmutzung, beispielsweise in einer Anwendung als Radschraube eines Fahrzeugrades, ist das topfartige Oberteil 18 oben mit einer Kunststoffkappe 29 dichtend abgedeckt. Am entgegengesetzten freien Endbereich der rohrartigen, die zu sichernde Vorrichtung 10 geringfügig übergreifenden Wandung des topfartigen Oberteils 18 ist innen eine Ringnut 30 zur Aufnahme eines Sprengrings 31 vorgesehen. Dieser dient zur Montage des Verschlussteils 16. An Stelle eines Sprengrings können auch andere geeignete Sicherungselemente treten, z.B. Seegerringe.

Schraubenfedern 32 in den Sackbohrungen 19 drücken die Verriegelungselemente 20 nach oben, sodass die Eingreifelemente 21 durch die Kraft dieser Schraubenfedern 32 an einer als Ringfläche ausgebildeten Anlagefläche 33 des Oberteils 18 anliegen und beim Drehen der Verriegelungselemente 20 entlang dieser Anlagefläche 33 gleiten und dadurch als Bremse wirken. Die der Anlagefläche 33 zugewandte obere Ringfläche der Eingreifelemente 21 ist mit einer Raststruktur 34 versehen. Diese besteht aus einer Reihe von als Raststellen 35 dienenden Ausnehmungen, die von der Fläche her der Ausnehmung 22 entsprechen, jedoch nur wenige zehntel Millimeter tief sind. Die Anlagefläche 33 gleitet dabei entlang dem radial innen verbleibenden Bereich 36, an den sich nach außen hin die Raststellen 35 anschließen. Wenn man versucht, die Position der die Entriegelung bewirkenden Ausnehmung 22 abzutasten, indem man das topfartige Oberteil 18 relativ zur zu sichernden Vorrichtung 10 verkantet, also ein Drehmoment relativ zur Drehachse ausübt, so gelangt die obere hierbei als Rastelement 37 wirkende Kante der Ringnut 14 in Eingriff mit einer der Raststellen 35. Beim Weiterdrehen rastet somit diese Kante von Raststelle 35 zu Raststelle 35, und es ist nicht möglich, diese Raststellen 35 von der Ausnehmung 22 zu unterscheiden. Hierdurch wird erreicht, dass de facto die Ausnehmung 22 nicht abgetastet werden kann.

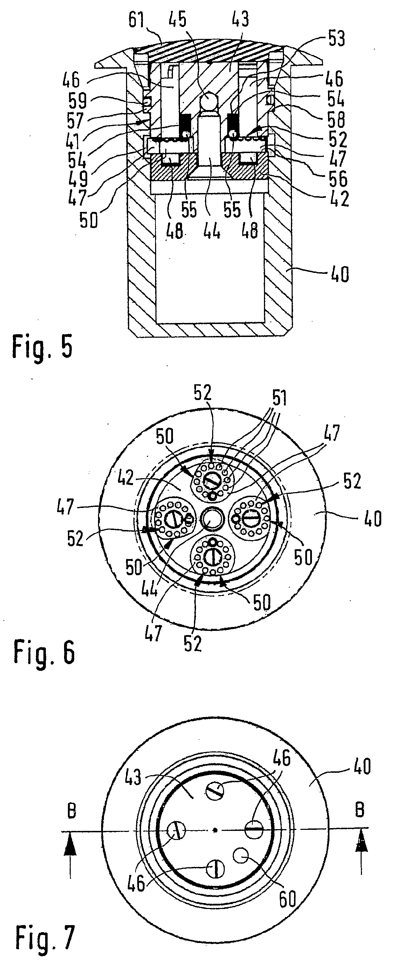

Bei dem in den Figuren 5 bis 7 nicht erfindungsgemäßen Beispiel ist eine zu sichernde Vorrichtung 40 als sogenannter Minitresor rohrartig mit geschlossenem Boden ausgebildet. Ein wiederum zweiteiliges Verschlussteil 41 dient zum Verschließen der in Figur 5 oberen Öffnung der Vorrichtung 40 und besteht wiederum aus einem scheibenförmigen Unterteil 42 und einem zylindrischen Oberteil 43. Das Unterteil 42 und das Oberteil 43 sind miteinander mittels einer Halteschraube 44 verschraubt. Am Boden der Gewindebohrung im Oberteil 43 für die Halteschraube 44 befindet sich wiederum eine Stahlkugel 45, die zur Verhinderung eines Aufbohrens dort angeordnet ist.

In gleicher Weise wie beim ersten Ausführungsbeispiel sind zwischen dem Unterteil 42 und dem Oberteil 43 vier Verriegelungselemente 46 drehbar gelagert, die mit Eingreifelementen 47 versehen sind. Die wiederum in Sackbohrungen 48 des Unterteils 42 gelagerten Verriegelungselemente 46 weisen dort im Gegensatz zum ersten Ausführungsbeispiel keine Schraubenfedern auf. Beim Drehen der Verriegelungselemente 46 greifen diese radial nach außen in eine Umfangsnut 49 an der Innenseite der rohrartigen Vorrichtung 40 zur Verriegelung des Verschlussteils 41 ein. wie aus Figur 6 erkennbar ist, besitzen die Eingreifelemente 47 jeweils an einer Stelle eine Abflachung 50. Diese Abflachung ist so gestaltet, dass eine Entriegelung stattfindet, wenn alle Abflachungen 50 radial nach außen weisen. Dann gelangen die Eingreifelemente 47 außer Eingriff mit der Umfangsnut 49.

An der zur zu verschließenden Öffnung der Vorrichtung 40 hinweisenden Ringfläche der Eingreifelemente 47 sind über den Umfang verteilt Vertiefungen 51 angeordnet, die Raststrukturen 52 bilden. In parallel zur Längsrichtung verlaufenden Sackbohrungen 53 im Oberteil 43 sind Schraubenfedern 54 angeordnet, die jeweils eine Rastkugel 55 gegen die Eingreifelemente 47 drücken, derart, dass bei einer Drehung eines Verriegelungselements 46 die entsprechende Rastkugel 55 von Vertiefung 51 zu Vertiefung 51 springt. Hierdurch wird, wie beim ersten Ausführungsbeispiel, verhindert, dass die Entriegelungsstellungen abgetastet werden können. Durch die Schraubenfedern 54 werden über die Rastkugeln 55 die Eingreifelemente 47 gegen das Unterteil 42 gedrückt, das somit eine gleitende Anlagefläche 56 für die Eingreifelemente 47 und damit für die Verriegelungselemente 46 bildet

Um die Einstecktiefe des Verschlussteils 41 in den Innenraum der Vorrichtung 40 zu begrenzen, besitzt das Oberteil 43 nach außen hin einen ringförmigen Anschlag 57, wobei ein Gegenanschlag 58 an der Innenwandung der Vorrichtung 40 die Einsteckbewegung begrenzt. Der ringförmige Anschlag 57 ist dabei mit einer Ringdichtung 59 versehen, die eine Abdichtung zur Innenfläche der Vorrichtung 40 bildet.

Die Entriegelung, also das Auffinden der Entriegelungsstellen der Verriegelungselemente 46, kann wiederum gemäß dem ersten Ausführungsbeispiel mit dem in Figur 4 dargestellten Justierglied 23 erfolgen. Zum Herausziehen des entriegelten Verschlussteils 41 dient wiederum ein Gewindesackloch 60 an der Außenstirnfläche des Oberteils 43. In dieses Gewindesackloch 60 kann das Justierglied 23 eingeschraubt werden.

Es ist auch möglich, die Entriegelung ohne Einstellskala 25 und ohne Betrachtung des Verschlussteils 41 durchzuführen. Hierzu muss die Raststruktur 52 an einer Stelle anstelle einer oder mehrerer Vertiefungen 51 ein Langloch aufweisen, das durch Drehen des Justierglieds 23 abgetastet werden kann. Dieses Langloch dient als Referenzstellung, ab der eine vorgebbare Zahl von Rastbewegungen jeweils zur Entriegelungsstellung führt.

Auch bei dieser nicht erfindungsgemäßen Ausführung dient wiederum eine Kunststoffkappe 61 oder eine Abdeckkappe aus einem anderen Material zur Abdeckung des Verschlussteils 41.

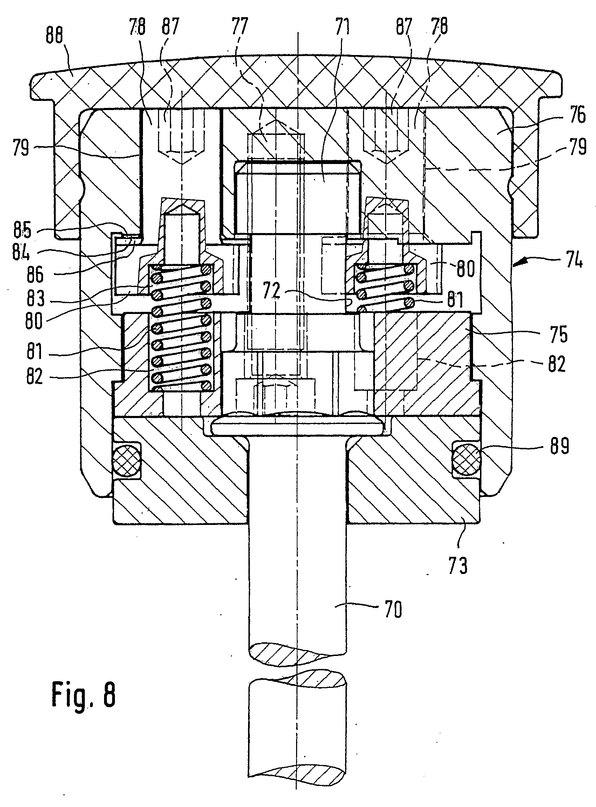

Bei der in Figur 8 dargestellten, weiteren zur Erfindung gehöhrenden Ausführung ist eine zu sichernde Vorrichtung 70 als welle oder Achse ausgebildet, beispielsweise als Fahrradachse. Wie beim ersten Ausführungsbeispiel besitzt diese als Achse ausgebildete Vorrichtung 70 einen zylindrischen Fortsatz 71, der mit einer Ringnut 72 versehen ist. Der zylindrische Fortsatz 71 kann im Einzelfall auch als Werkzeugangriffsteil ausgebildet sein. Weiterhin ist ein ringscheibenförmiges Element 73 derart mit dem Endbereich der Vorrichtung 70 fest verbunden, beispielsweise verschweißt, verlötet, verklebt oder verklemmt, dass der zylindrische Fortsatz 71 über dieses ringscheibenförmige Element 73 übersteht.

Ein verschlussteil 74 ist ähnlich dem verschlussteil des ersten Ausführungsbeispiels ausgebildet und dient zur Abdeckung des zylindrischen Fortsatzes 71. Es besteht aus einem ringscheibenförmigen Unterteil 75 und einem topfartigen Oberteil 76, die miteinander mittels einer Halteschraube 77 verschraubt sind.

Fünf Verriegelungselemente 78 sind mit ihren achsenartigen Bereichen in Durchgangsbohrungen 79 des Oberteils 76 drehbar gelagert und weisen wiederum scheibenartige Eingreifelemente 80 auf. Schraubenfedern 81 stützen sich in Bohrungen 82 des Unterteils 75 ab und münden in Sackbohrungen 83 der Eingreifelemente 80. Dadurch werden die Eingreifelemente 80 gegen eine die Verriegelungselemente 78 umgreifende Ringfläche 84 des Oberteils 76 federnd gedrückt. Diese Ringfläche 84 ist mit einer Zahnung 85 versehen, wobei die dieser Zahnung 85 gegenüberstehende Ringfläche der Eingreifelemente 80 mit einem Rastzahn 86 versehen ist. Beim Drehen der Verriegelungselemente 78 springt somit der Rastzahn 86 jeweils von Zahn zu Zahn der als Raststruktur dienenden Zahnung 85. In einer der vorigen nicht erfindungsgemäßen Ausführung entsprechenden Wirkungsweise wird dadurch beim Drehen der Verriegelungselemente 78 verhindert, dass die Entriegelungsposition abgetastet werden kann. Die Gestalt der Eingreifelemente 80 entspricht dabei der Gestalt der Eingreifelemente 21 des ersten erfindungsgemäßen Ausführungsbeispiels, wobei die Entriegelungsausnehmungen in der Schnittdarstellung gemäß Figur 8 nicht erkennbar sind.

Zum Drehen der Verriegelungselemente 78 dienen Innensechskant-Ausnehmungen 87 am freien oberen Ende dieser Verriegelungselemente 78. Das Drehen ist somit mittels eines Sechskantschlüssels möglich. Zur Erkennung einer Referenzposition weist die als Raststruktur dienende Zahnung 85 eine Lücke oder einen breiteren Zahn auf, was beim Drehen abgetastet werden kann. Ab dieser Referenzposition muss dann jeweils um eine vorgegebene Zahl von Zahnrastungen bis zur Entriegelungsposition gedreht werden. Es ist selbstverständlich auch möglich, das obere Ende der Verriegelungselemente 78 gemäß den vorherigen Ausführungsbeispielen auszubilden und ein Justierglied 23 zu verwenden. Bei kontinuierlicher Zahnung 85 muss dann die Einstellung mittels der Einstellskala 25 erfolgen.

Zur oberen Abdichtung des Verschlussteils 74 dient wiederum eine Abdeckkappe 88, die beispielsweise aus dichtendem Kunststoffmaterial bestehen kann. Zur unteren Abdichtung dient eine Ringdichtung 89 am ringscheibenförmigen Element 73 der Vorrichtung 70, die vom freien rohrförmigen Ende des Oberteils 76 übergriffen wird und dadurch die Abdichtung bewirkt.

Beim ersten erfindungsgemäßen Ausführungsbeispiel wird das Unterteil des Verschlussteils am Oberteil mittels eines Sprengrings gehalten, während dies beim zweiten Ausführungsbeispiel durch eine Verschraubung erfolgt, wobei die Montagearten auch untereinander austauschbar sind. Hierdurch können die Verriegelungselemente ausgewechselt werden, beispielsweise durch andere Verriegelungselemente, die eine andere Codierung aufweisen. Es ist jedoch in einer einfacheren Ausführung auch möglich, das Oberteil mit dem Unterteil fest zu verbinden, beispielsweise durch verkleben, Verlöten, Verschweißen oder dergleichen. Die Zahl der Verriegelungselemente beträgt bei den Ausführungsbeispielen vier oder fünf. Dies ist selbstverständlich nicht zwingend. Sinnvollerweise müssen mindestens zwei Verriegelungselemente vorgesehen sein, wobei die Zahl nach oben platzbedingt begrenzt ist.

Neben den im Rahmen der Ausführungsbeispiele beschriebenen Anwendungen kann die erfindungsgemäße Sicherung überall dort angewendet werden, wo Öffnungen sicher verschlossen oder Endbereiche von stabförmigen oder sonstigen Vorrichtungen durch ein Abdecken des Verschlussteils gesichert werden sollen. Wie bereits beschrieben, können Schrauben und Muttern jeglicher Ausführung und für jegliche Anwendung gesichert werden. Weiterhin können Fahrradachsen, Anhängerkupplungen, Bügelschlösser und dergleichen gesichert werden. Zu sichernde Öffnungen können gemäß dem zweiten Ausführungsbeispiel Minitresore sein, die als Schlüsseldepot in Fahrzeugen oder sonstigen Einrichtungen eingebaut sind. weitere Arten solcher Sicherungen sind Lenkradschlösser, Bolzenschlösser, Kugelhähne und dergleichen. Entsprechende Elemente können zur Plombierung von Regelanlagen, Stromzählern, Wasserzählern, Containern, Transportsicherungen, Minen oder dergleichen eingesetzt werden. Auch eine Anwendung als Motorwegfahrsperre oder Bremsscheibenschloss ist möglich.

Die Ausführungen der beschriebenen Ausführungsbeispiele und deren Einzelteile können auch untereinander ausgetauscht werden. So kann auch das erste erfindungsgemäße mit einer Verriegelung radial nach außen zur Sicherung von Öffnungen ausgebildet sein.

Weiterhin kann die Kraftwirkung der Federn auch in entgegengesetzter Richtung wirken, wobei die Raststruktur und das Rastelement entsprechend in entgegengesetzter Richtung zusammen wirken, so dass der erfindungsgemäße Tastschutz anstelle bei Zug dann bei Druck wirksam wird.

## Patentansprüche

1. Mit einer zu sichernden Vorrichtung zusammenwirkende Sicherungseinrichtung, die ein in eine Bohrung der zu sichernden Vorrichtung (10) einsteckbares oder auf einen freien Endbereich der zu sichernden Vorrichtung (10) aufsteckbares Verschlussteil (16) besitzt, in dem wenigstens zwei Verriegelungselemente (20) drehbar gelagert sind und mit Ausnahme jeweils einer festgelegten Drehposition mittels eines Eingreifelements (21) in einer Ringnut (14) der zu sichernden Vorrichtung (10) zur Verriegelung derselben eingreifen, wobei jeweils ein von außen zugänglicher Endbereich der Verriegelungselemente (20) zum Eingriff eines Justierglieds (23) ausgebildet ist, wobei jedem Verriegelungselement (20) eine dieses in Richtung seiner Drehachse gegen eine Anlagefläche (36) des Verschlussteils (16) drückende Feder (32) zugeordnet ist, und dass eine mehrere Raststellen (35) aufweisende Raststruktur (34) an einer Ringfläche der Verriegelungselemente (20) oder des Verschlussteils (16) angeordnet ist, wobei in axialer Richtung ein Rastelement (37) gegenübersteht, das bei einer Drehung des jeweiligen Verriegelungselements (20) nigstens beim Verkanten oder axialen Verschieben des Verschlussteils (16) in Raststellen (35) der Raststruktur (34) eingreift, **dadurch gekennzeichnet, dass** durch die jeweils auf ein Verriegelungselement (20) einwirkende Feder (32) das Eingreifelement (21) federbelastet gegen die als Ringfläche ausgebildete Anlagefläche (33) des Verschlussteils (16) gedrückt wird, wobei die dieser Anlagefläche (33) zugewandte Ringfläche des Eingreifelements (21) mit der Raststruktur (34) versehen ist und eine dieser Ringfläche gegenüberliegende Kante der Ringnut (14) der zu sichernden Vorrichtung (10) als Rastelement (37) dient, das wenigstens beim Verkanten oder axialen verschieben des Verschlussteils (16) in eine der als geringfügig vertiefte Ausnehmungen ausgebildeten Raststellen (35) der Raststruktur (34) eingreift, wobei eine Fläche der Raststellen (35) einer Fläche einer Ausnehmung (22) des Eingreifelements (21) entspricht, wobei diese Ausnehmung (22) die eine Entriegelungsstellung des Eingreifelements (21) bestimmt.

2. Sicherungseinrichtung nach Anspruch 1, **dadurch gekennzeichnet, dass** die Verriegelungselemente (20) als drehbar gelagerte Stifte ausgebildet sind, die jeweils mit dem scheibenförmigen konzentrischen Eingreifelement (21) zum Eingriff in die Ringnut (14) der zu sichernden Vorrichtung (10) versehen sind, wobei das Eingreifelement (21) in der festgelegten Drehposition (Entriegelungsposition) eine randseitige Ausnehmung (22) besitzt, durch die ein Eingriff in die Ringnut (14) in dieser Drehposition verhindert wird.

3. Sicherungseinrichtung nach einem der vorhergehenden Ansprüche, **dadurch gekennzeichnet, dass** das Justierglied (23) mit einer Einstellskala (25) versehen ist.

4. sicherungseinrichtung nach einem der vorhergehenden Ansprüche, **dadurch gekennzeichnet, dass** das Justierglied (23) oder ein anderes Hilfsinstrument mit dem Verschlussteil (16, 41; 74) zugfest verbindbar ist, insbesondere mittels einer Gewinde- oder Bajonettverbindung (27).

5. Sicherungseinrichtung nach einem der vorhergehenden Ansprüche, dadurch gekenntzeichnet, dass die Bohrung der zu sichernden Vorrichtung mit einer Umfangsnut als Ringnut zur Aufnahme der Eingreifelemente versehen ist.

6. Sicherungseinrichtung nach einem der Ansprüche 1 bis 4, **dadurch gekennzeichnet, dass** der freie Endbereich der zu sichernden Vorrichtung (10) mit einem in das Verschlussteil (16) eingreifenden zylindrischen Endstück (11) versehen ist, das mit der Ringnut (14) zur Aufnahme der Ein-greifelemente (21) versehen ist.

7. Sicherungseinrichtung nach einem der vorhergehenden Ansprüche, **dadurch gekennzeichnet, dass** das Verschlussteil (16) aus wenigstens zwei axial zusammensetzbaren, insbesondere zusammenschraubbaren Einzelelementen (17, 18) besteht, die jeweils Lagerstellen für die Verriegelungselemente (20) aufweisen.

8. Sicherungseinrichtung nach einem der vorhergehenden Ansprüche, **dadurch gekennzeichnet, dass** die mit den Zugriffen zu den Endbereichen der Verriegelungselemente (20) versehene Stirnseite des Verschlussteils (16) mit einer lösbaren Abdeckkappe (29) versehen ist.

## Claims

1. Securing equipment interacting with a device to be secured which has a locking part (16) which is able to be plugged into a bore of the device to be secured (10) or able to be inserted into a free end region of the device to be secured (10), in which locking part at least two locking elements (20) are mounted rotatably and engage with an annular groove (14) of the device to be secured (10), with the exception of a fixed rotational position respectively, by means of an engagement element (21), for the locking of the same, wherein an end region of the locking elements (20) which is accessible from the outside is formed to engage an adjustment member (23) respectively, wherein a spring (32) is allocated to each locking element (20), said spring pressing this against a contact surface (36) of the locking part (16) in the direction of its rotational axis, and that a catch structure (34) having several catch points (35) is arranged on an annular surface of the locking elements (20) or of the locking part (16), wherein a catch element (37) lies opposite in the axial direction, which, in the case of a rotation of the respective locking element (20), at least during tilting or axial displacement of the locking part (16), engages with catch points (35) of the catch structure (34), **characterised in that**, due to the spring (32) which influences a locking element (20) respectively, the engagement element (21) is pressed in a spring-loaded manner against the contact surface (33) of the locking part (16) formed as an annular surface, wherein the annular surface of the engagement element (21) facing towards this contact surface (33) is provided with the catch structure (34) and an edge of the annular groove (14) of the device to be secured (10) which lies opposite this annular surface serves as a catch element (37) which engages with one of the catch points (35) of the catch structure (34) formed as slightly indented recesses at least during tilting or axial displacement of the locking part (16), wherein a surface of the catch points (35) corresponds to a surface of a recess (22) of the engagement element (21), wherein this recess (22) determines the unlocking position of the engagement element (21).

2. Securing equipment according to claim 1, **characterised in that** the locking elements (20) are formed as rotatably mounted pins which are provided with the disc-shaped concentric engagement element (21) to engage with the annular groove (14) of the device to be secured (10) respectively, wherein the engagement element (21) has an edge-side recess (22) in the fixed rotational position (unlocking position), using which an engagement with the annular groove (14) is prevented in this rotational position.

3. Securing equipment according to one of the preceding claims, **characterised in that** the adjusting member (23) is provided with an adjustment scale (25).

4. Securing equipment according to one of the preceding claims, **characterised in that** the adjusting member (23) or another support instrument is able to be connected to the locking part (16, 41, 74) to be rigid, in particular by means of a threaded connection or bayonet joint (27).

5. Securing equipment according to one of the preceding claims, **characterised in that** the bore of the device to be secured is provided with a peripheral groove as an annular groove to receive the engagement elements.

6. Securing equipment according to one of claims 1 to 4, **characterised in that** the free end region of the device to be secured (10) is provided with a cylindrical end piece (11) which engages with the locking part (16), and which is provided with the annular groove (14) to receive the engagement elements (21).

7. Securing equipment according to one of the preceding claims, **characterised in that** the locking part (16) consists of at least two individual elements (17, 18) which are able to be assembled axially, in particular able to be screwed together, and which have respective bearing points for the locking elements (20).

8. Securing equipment according to one of the preceding claims, **characterised in that** the front side of the locking part (16) which is provided with the accesses to the end regions of the locking elements (20) is provided with a releasable cover cap (29).

## Revendications

1. Installation de sécurité coopérant avec un dispositif à protéger qui comporte une pièce de fermeture (16) pouvant être emboîtée dans un perçage du dispositif (10) à protéger ou pouvant être emboîtée sur une zone d'extrémité libre du dispositif (10) à protéger, dans laquelle au moins deux éléments de verrouillage sont montés mobiles en rotation (20), et viennent en prise pour permettre son verrouillage, à l'exception d'une position de rotation déterminée respective au moyen d'un élément d'accrochage (21) dans une rainure annulaire (14) du dispositif (10) à protéger, une zone d'extrémité respective de l'élément de verrouillage (20) accessible de l'extérieur étant réalisée pour permettre la mise en prise d'un organe d'ajustage (23),
à chaque élément de verrouillage (20) étant associé un ressort (32) poussant celui-ci en direction de son axe de rotation contre une surface d'appui (36) de la pièce de fermeture (16), et une structure d'encliquetage (34) comprenant plusieurs emplacements d'encliquetage (35) étant positionnée sur une surface annulaire de l'élément de verrouillage (20) ou de la pièce de fermeture (16), en direction axiale étant situé en regard, un élément d'encliquetage (37) qui, lors d'une rotation de l'élément de verrouillage (20) respectif, vient en prise au moins par blocage ou déplacement axial de la pièce de fermeture (16) dans des emplacements d'encliquetage (35) de la structure d'encliquetage (34), **caractérisé en ce que**
par l'intermédiaire du ressort (32) agissant respectivement sur un élément de verrouillage (20), l'élément d'accrochage (21) est poussé élastiquement contre la surface d'appui (33) réalisée sous la forme d'une surface annulaire de la pièce de fermeture (16), la surface annulaire de l'élément d'accrochage (21) tournée vers cette surface d'appui (33) étant équipée de la structure d'encliquetage (34), et un bord de la rainure annulaire (14) du dispositif (10) à protéger situé en regard de cette surface annulaire constituant un élément d'encliquetage (37), qui, au moins par blocage, ou déplacement axial de la pièce de fermeture (16), vient en prise dans l'un des emplacements d'encliquetage (35) de la structure d'encliquetage (34) réalisé sous la forme d'évidements un peu creusés, une surface des emplacements d'encliquetage (35) correspondant à une surface d'un évidement (22) de l'élément d'accrochage (21), et cet évidement (22) définissant une position de déverrouillage de l'élément d'accrochage (21).

2. Installation de sécurité conforme à la revendication 1,
**caractérisée en ce que**
les éléments de verrouillage (20) sont réalisés sous la forme de broches montées mobiles en rotation qui sont respectivement équipées d'un l'élément d'accrochage concentrique en forme de disque (21) pour venir en prise dans la rainure annulaire (14) du dispositif (10) à bloquer, l'élément d'accrochage (21) comprenant, dans la position de rotation déterminée (position de déverrouillage) un évidement périphérique (22) empêchant la mise en prise dans la rainure annulaire (14) dans cette position de rotation.

3. Installation de sécurité conforme à l'une des revendications précédentes,
**caractérisée en ce que**
l'organe d'ajustage (23) est équipé d'une graduation de réglage (25).

4. Installation de sécurité conforme à l'une des revendications précédentes,
**caractérisée en ce que**
l'organe d'ajustage (23) ou un autre instrument auxiliaire peut être relié de façon résistante à la traction avec la pièce de fermeture (16, 41, 74) en particulier au moyen d'une liaison filetée ou d'une liaison à baïonnette (27).

5. Installation de sécurité conforme à l'une des revendications précédentes,
**caractérisée en ce que**
le perçage du dispositif à protéger est équipé en tant que rainure annulaire d'une rainure périphérique destinée à recevoir l'élément d'accrochage.

6. Installation de sécurité conforme à l'une des revendications 1 à 4,
**caractérisée en ce que**
la zone d'extrémité libre du dispositif (10) à protéger est équipée d'une pièce d'extrémité cylindrique (11) venant en prise dans la pièce de fermeture (16) qui est équipée de la rainure annulaire (14) destinée à recevoir l'élément d'accrochage (21).

7. Installation de sécurité conforme à l'une des revendications précédentes,
**caractérisée en ce que**
la pièce de fermeture (16) est constituée d'au moins deux éléments indépendants (17, 18) pouvant être assemblés en particulier vissés axialement, qui présentent respectivement des emplacements de montage des éléments de verrouillage (20).

8. Installation de sécurité conforme à l'une des revendications précédentes,
**caractérisée en ce que**
la face frontale de la pièce de fermeture (16) équipée de l'élément de verrouillage (20) en prise avec la zone d'extrémité des éléments de verrouillage (20) est équipée d'un capuchon de recouvrement amovible (29).
